# EUROPEAN PATENT APPLICATION

(11) **EP 2 436 935 A1**
(43) Date of publication of application: **04.04.2012**
(21) Application number: 11183225.9
(22) Date of filing: 29.09.2011
(51) Int. Cl.: F16B 19/10

(54) **A blind rivet and fastening method thereof**

(30) Priority: 30.09.2010 JP 2010220750
(71) Applicant: Newfrey LLC, Newark, Delaware 19711 (US)
(72) Inventor: Imaizumi, Hiroshi, Toyohashi-shi, Aichi 441-8540 (JP)
(74) Representative: Haar, Lucas Heinz Jörn

(57) **Abstract**

The object of the invention is to provide a pull-through rivet in which the plating on the surface of the mandrel does not peel off and produce metal powder. This object is solved by a blind rivet assembly for fastening a plurality of components (50) having a mounting hole (54) wherein the blind rivet assembly comprises a rivet body (20) and a mandrel (40). The rivet body (20) has a hollow sleeve (21) and a flange (22) formed at one end of the sleeve. The mandrel (40) has a slender stem (41) having a diameter smaller than the inner diameter of the sleeve and a length greater than the sleeve, and a head (43) whose diameter is greater than the inner diameter of the sleeve. A beveled face (31) or a convex face (32) are formed in the end portion of the through hole (25) in the sleeve of the rivet body. When the stem of the mandrel is pulled to fasten the components using the rivet body, the end portion of the sleeve is pushed by the head to expand the diameter, the head is pulled through the through hole in the rivet body without breaking off from the stem of the mandrel, and the components are fastened between the flange of the rivet body and the expanded-diameter end portion of the sleeve.

## Description

The present invention relates to a blind rivet and, more specifically, to a pull-through rivet and fastening method therefor in which the mandrel passes through the rivet body during the fastening operation.

A well-known blind rivet contains a hollow metal rivet body composed of a sleeve and a flange at one end of the sleeve, and a metal mandrel whose stem extends from the flange of the sleeve and passes through the rivet body. This blind rivet is advantageously able to fasten together a plurality of panels by performing an operation on only one side. The rivet body of the blind rivet has a hollow sleeve with a flange formed on one end. The mandrel of the blind rivet has a head whose diameter is greater than the inner diameter of the sleeve in the end portion, and a stem whose outer diameter passes through the rivet body. The head of the mandrel is arranged adjacent to the end of the sleeve on the opposite side of the flange of the rivet body, and the mandrel is inserted into the through hole of the rivet body so that the stem extends from the flange. When the stem of the mandrel is gripped with a fastening tool and strongly pulled out from the flange side of the rivet, one end of the sleeve in the rivet body is deformed and the diameter expanded. In this way, panels or other components can be fastened between the flange and the expanded-diameter sleeve. At this time, the mandrel is broken in the slender breakable portion of the stem.

A blind rivet fastened by breaking the mandrel is not stable at the open end of the rivet body in the expanded diameter direction. Also, the mandrel head is pulled more than necessary into the stem end of the rivet body. When the mandrel is broken in the breakable portion, the section from the breakable portion to the head remains on the rivet body side, and the remaining portion of the mandrel may fall out of the rivet body. As a result, a blind rivet is desired in which the diameter of the end portion of the rivet body is expanded stably. Also desired is a mandrel head which is not pulled more than necessary into the stem end of the rivet body. Also desired is a blind rivet in which a section of the mandrel does not remain.

In order to solve these problems, a blind rivet is provided in WO 2009/020543 A1 in which the head of the mandrel is pulled completely through the rivet body without breaking off from the stem of the mandrel. This type of blind rivet is called a pull-through rivet. The blind rivet assembly in WO 2009/020543 A1 has a rivet body and a mandrel, and is used to fasten a component. When the mandrel stem is gripped with a fastening tool and pulled strongly from the flange side of the rivet, the end portion of the sleeve in the rivet body is deformed and the diameter expanded. In this way, a panel or some other fastened component can be fastened between the flange and the expanded-diameter sleeve. At this time, the mandrel head is passed through the rivet body and pulled out without breaking off from the stem.

When the mandrel in the pull-through rivet of WO 2009/020543 A1 is pulled out and the mandrel head has pushed and expanded the rivet body, the edge of the through hole in the rivet body contacts the mandrel, peeling off the plating on the surface of the mandrel and creating metal powder.

Therefore, an object of the present invention is to provide a blind rivet (pull-through rivet) in which the plating on the surface of the mandrel does not peel off and produce metal powder when the pull-through rivet is fastened.

In order to achieve this purpose, the end portion of the through hole in the rivet body of the present invention is beveled or fashioned into convex shape similar to a surface portion of a toroid, and the beveled portion or convex shaped portion, which does not have edges, makes contact with the mandrel. As a result, the plating does not peel off and produce metal powder when the pull-through rivet is fastened.

The first aspect of the present invention is a blind rivet assembly for fastening a plurality of components having mounting holes, wherein the blind rivet assembly comprises a rivet body having a hollow sleeve and a flange formed in one end of the sleeve, and a mandrel having a slender stem whose diameter is smaller than the inner diameter of the sleeve and whose length is greater than the sleeve, and a head whose diameter is greater than the inner diameter of the sleeve, wherein a beveled face or a convex face is formed in the end portion of the through hole in the sleeve of the rivet body, and wherein when the stem of the mandrel is pulled to fasten the components using the rivet body, the end portion of the sleeve is pushed by the head to expand the diameter, the head is pulled through the through hole in the rivet body without breaking off from the stem of the mandrel, and the components are fastened between the flange of the rivet body and the expanded-diameter end portion of the sleeve.

Because the end portion of the through hole in the rivet body is beveled or convex shaped and because the beveled portion or convex face makes contact with the mandrel when the blind rivet is fastened, the plating on the mandrel does not peel off.

The head portion of the mandrel can have a tapered face on the opposite side of the terminal end portion, and the diameter of the end portion of the sleeve can be expanded by the tapered face of the head. In this way, the diameter of the end portion of the sleeve can be uniformly expanded. The terminal end portion of the mandrel head can be flat or recessed.

A countersink can be formed in the each one of the components, the flange of the rivet body can have a tapered outside face on the opposite side of the tool side end face, and the tapered outside face of the flange can contact the countersink in one of the components, the expanded-diameter end portion of the sleeve can contact the countersink in another component, and a plurality of components can be fastened together. In this way, the expanded diameter of the sleeve can be regulated by the countersinks, and the components can be fastened together stably.

After the components have been fastened together, the expanded-diameter end portion of the rivet body can be substantially on the same plane as the components or lower than the plane of the components. In this way, the space in which the components are fastened can be reduced.

The second aspect of the present invention is a method for fastening a plurality of components using the rivet body of a blind rivet assembly, wherein a rivet body is prepared having a hollow sleeve and a flange formed on one end of the sleeve, a beveled face or a convex face being formed in the end portion of the through hole in the sleeve of the rivet body, a mandrel is prepared having a slender stem whose diameter is smaller than the inner diameter of the sleeve and whose length is greater than the sleeve and a head whose diameter is greater than the inner diameter of the sleeve, and the rivet body and the mandrel are combined to obtain a blind rivet assembly, and wherein the blind rivet assembly is inserted into the through holes of the components, the stem of the mandrel is pulled out from the sleeve end while supporting the sleeve, the head portion expands the diameter of the end portion of the sleeve, the head is pulled through the through hole in the rivet body without breaking off from the stem of the mandrel, and the components are fastened between the flange of the rivet body and the expanded-diameter end portion of the sleeve.

Because the end portion of the through hole in the sleeve of the rivet body is beveled or fashioned into the shape of the letter R, the plating on the mandrel does not peel off and create metal dust when the blind rivet is fastened. Also, a blind rivet can be obtained in which the diameter of the end portion of the rivet body is stably expanded.

The present invention will become more fully understood from the detailed description and the accompanying drawings, wherein:
FIG. 1 is a perspective view of the blind rivet assembly in the first embodiment of the present invention,
FIG. 2 (a) is a cross-sectional view of a portion of a rivet body of the prior art, (b) is a cross-sectional view of a portion of the rivet body in the first embodiment of the present invention, and (c) is a cross-sectional view of a portion of the rivet body in the second embodiment of the present invention,
FIG. 3 is a side view of the mandrel in the first embodiment of the present invention,
FIG. 4 is a cross-sectional view of the first embodiment of the present invention in which the blind rivet assembly has been set in the components,
FIG. 5 is a cross-sectional view of the first embodiment of the present invention in which the blind rivet assembly has fastened the components,
FIG. 6 is a cross-sectional view showing the steps performed when components are fastened using a blind rivet assembly of the prior art,
FIG. 7 is an enlarged view inside the circles denoted by A in FIGS 6 (a) through (c),
FIG. 8 is a cross-sectional view showing the steps performed when components are fastened using the blind rivet assembly in the first embodiment of the present invention, and
FIG. 9 is an enlarged view inside the circles denoted by C in FIGS 8 (a) through (c).

The following is an explanation with reference to the figures of the blind rivet assemblies in an embodiment of the present invention.

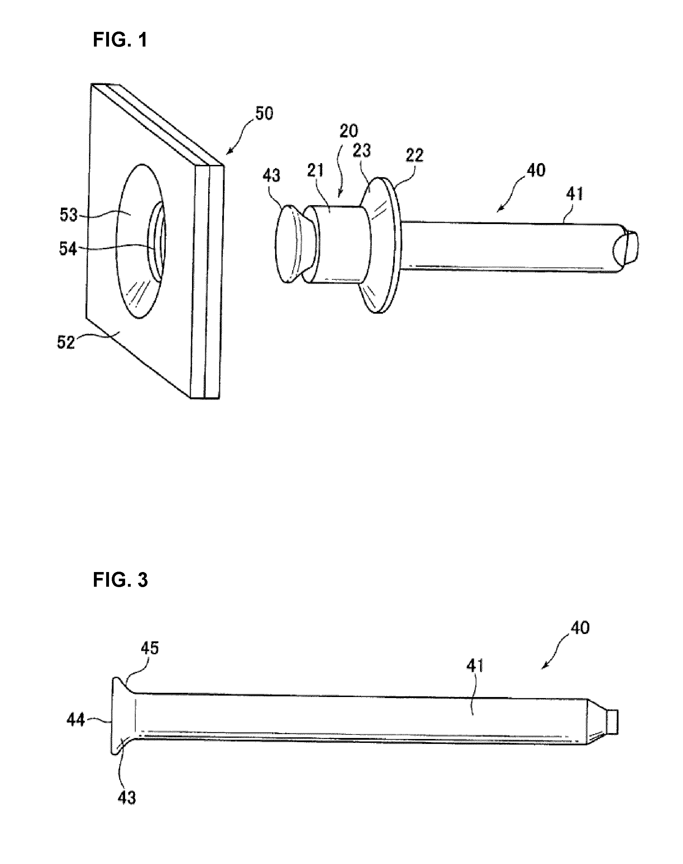

FIG 1 is a perspective view of the blind rivet assembly in the first embodiment of the present invention. The blind rivet assembly includes a rivet body 20 and a mandrel 40. The mandrel is inserted 40 with the stem 41 facing forward from the end portion of the rivet body 20 on the side with the sleeve 21, and the head 43 is arranged adjacent to the end portion of the sleeve 21. This blind rivet assembly is inserted into the mounting hole 54 in a component 50 so that the flange 22 makes contact with the component 50. While the flange 22 of the rivet body 20 is held with a fastening tool (not shown), the stem 41 of the mandrel 40 is gripped and strongly pulled from the flange 22 end of the rivet body 20. This deforms and expands the diameter of the end portion of the sleeve 21 in the rivet body 20, and panels or some other components 50 can be fastened between the flange 22 and the expanded-diameter sleeve. At this time, the head 43 of the mandrel 40 is pulled through the rivet body 20 without breaking off from the stem 41.

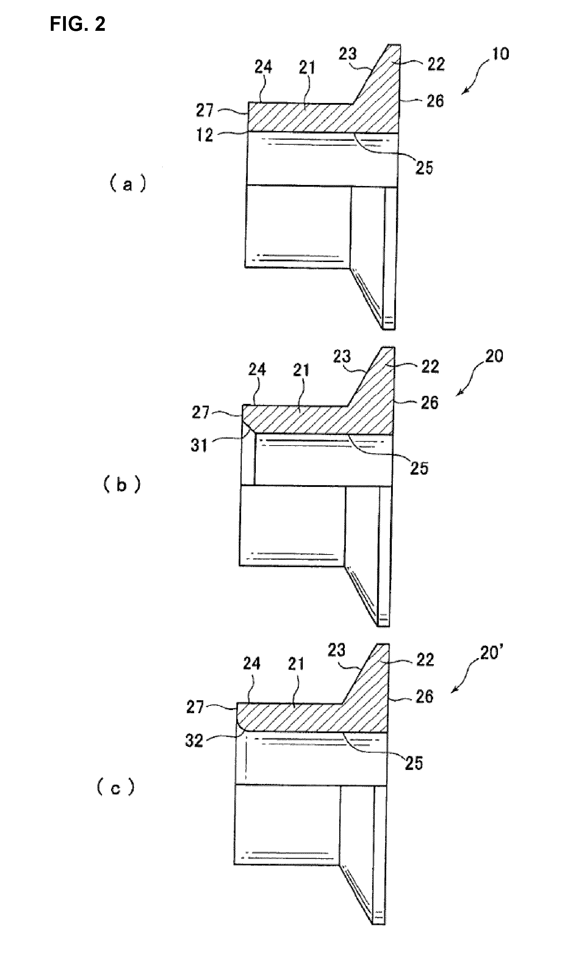

The following is an explanation with reference to FIG 2 and FIG 3 of the rivet body 20 and the mandrel 40 constituting the blind rivet assembly. FIG 2 (a) is a cross-sectional view of a portion of a rivet body 10 in a blind rivet assembly of the prior art. The surface of the through hole 25 at the blind end portion 27 of the rivet head 10 has an edge 12. FIG 2 (b) is a cross-sectional view of a portion of the rivet body 20 in the first embodiment of the present invention. The rivet body 20 includes a cylindrical sleeve 21 and a flange 22 formed on one end of the sleeve 21. The the flange 22 has a tapered outside face 23 on the side facing sleeve 21 . The outside face of the sleeve 21 is a cylindrical outside face 24. The through hole 25 extends between a tool side end face 26 of the rivet body 20 and the blind side end portion 27. The outer diameter of the sleeve 21 is slightly smaller than the diameter of the through holes 54 in the components 50, which is the right size to be able to pass through the through holes 54. The outside diameter of the flange 22 is greater than the outside diameter of the mounting hole 54, and the tapered outside surface 23 makes contact with the countersinks 53 in the components 50.

In the rivet body 20 shown in FIG 2 (b), the surface of the through hole 25 in the blind side end portion 27 has a beveled portion 31. As a result, the through hole 25 in the blind side end portion 27 does not have an edge. When the mandrel 40 is pulled through the rivet body 20, it does not make contact with an edge and the plating on the mandrel 40 is not peeled off. The materials in the rivet body 20 can be steel and zinc plating.

FIG 2 (c) is a cross-sectional view of a portion of the rivet body 20' in the second embodiment of the present invention. In the rivet body 20' shown in FIG 2 (c), the surface of the through hole 25 in the blind side end portion 27 does not have a beveled portion 31 but a convex face 32. The rest of the configuration is similar to the rivet body 20 in the first embodiment. Because the mandrel 40 does not come into contact with an edge when a convex face 32 is formed, the plating on the mandrel 40 does not peel off.

FIG 3 is a side view of the mandrel 40 in the first and second embodiments of the present invention. The mandrel 40 is equipped with a slender stem 41 and an expanded-diameter head 43 at one end of the stem 41. The stem 41 is a cylindrical column with an outside diameter smaller than the inner diameter of the through hole 25 in the rivet body 20 so that it can be inserted into the through hole 25. The end portion of the head 43 is a flat terminal end portion 44. The face on the opposite end of the terminal end portion 44 is a tapered face 45, and this continues to the stem 41. The diameter of the head 43 is larger than the inner diameter of the through hole 25 in the rivet body 20. The diameter of the head 43 is smaller than the through holes 54 in the components 50 so that it can pass through the through holes 54. The materials in the mandrel 40 can be steel and zinc plating. As shown in FIG 1, countersinks 53 are formed in the outside faces 51, 52 of the components 50, and the front ends of the countersinks 53 continue into the mounting holes 54. In these embodiments, two components 50 are combined so that the countersinks 53 face outward.

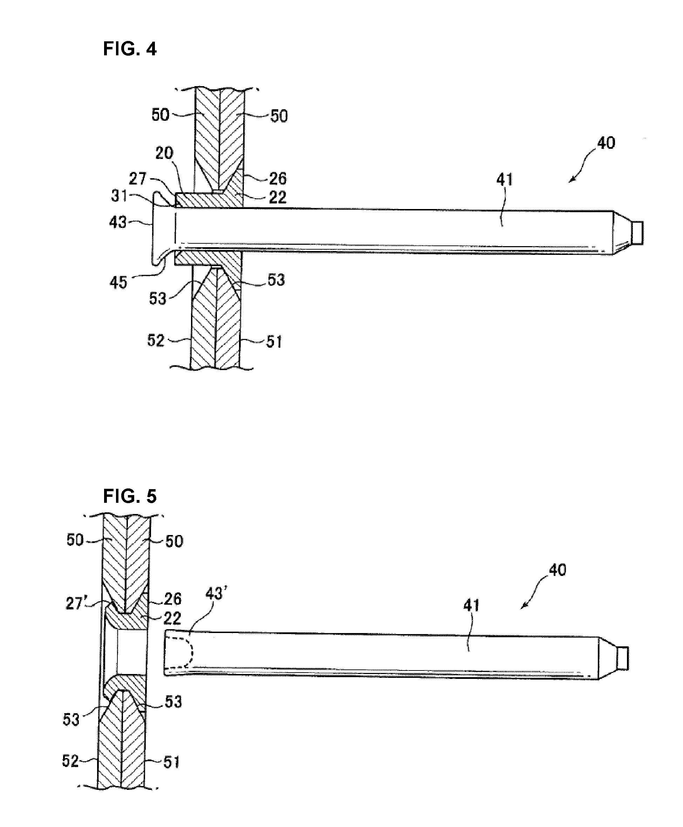

The following is an explanation of the operations performed to fasten components 50 using the blind rivet assembly in the first embodiment of the present invention. FIG 4 is a cross-sectional view showing the blind rivet assembly set in the components 50. The mandrel is inserted 40 with the stem 41 facing forward from the blind side end portion of the rivet body 20. A blind rivet assembly with a rivet body 20 and a mandrel 40 combined in this way is inserted into a hole in a component 50 from the right in FIG 4, and the flange 22 in the rivet body 20 makes contact with the countersink 53 in the component 50. In the first embodiment, the outside face 51 of the component 50 and the end face of the flange 22 are substantially on the same plane.

While the tool side end face 26 of the rivet body 20 is being held by the nose piece of a fastening tool (not shown) in this state, the stem 41 of the mandrel 40 is pulled out with a fastening tool (not shown). At this time, the head 43 of the mandrel 40 pushes and expands the blind side end portion 27 of the sleeve 21 in the rivet body 20, and enters the through hole 25 in the rivet body 20. The head 43 of the mandrel 40 is crushed but not broken, and completely passes through the through hole 25 in the rivet body 20.

FIG 5 is a cross-sectional view of components 50 fastened by the rivet body 20. The blind side end portion 27 of the rivet body 20 is pushed by the head 43 of the mandrel 40 to outwardly expand the diameter, the expanded-diameter end portion makes contact with the countersink 53 in a component 50, and the components 50 are interposed between the expanded-diameter blind side end portion 27' and the flange 22. The head 43 of the mandrel 40 is pulled through the through hole 25 in the rivet body 20 as indicated by 43' and the diameter is reduced. The head 43' is thus integrated with the stem 41. After the rivet has been attached, the blind side end portion 27' of the rivet body 20 is substantially flush or below flush the adjacent outside surface of the components 50.

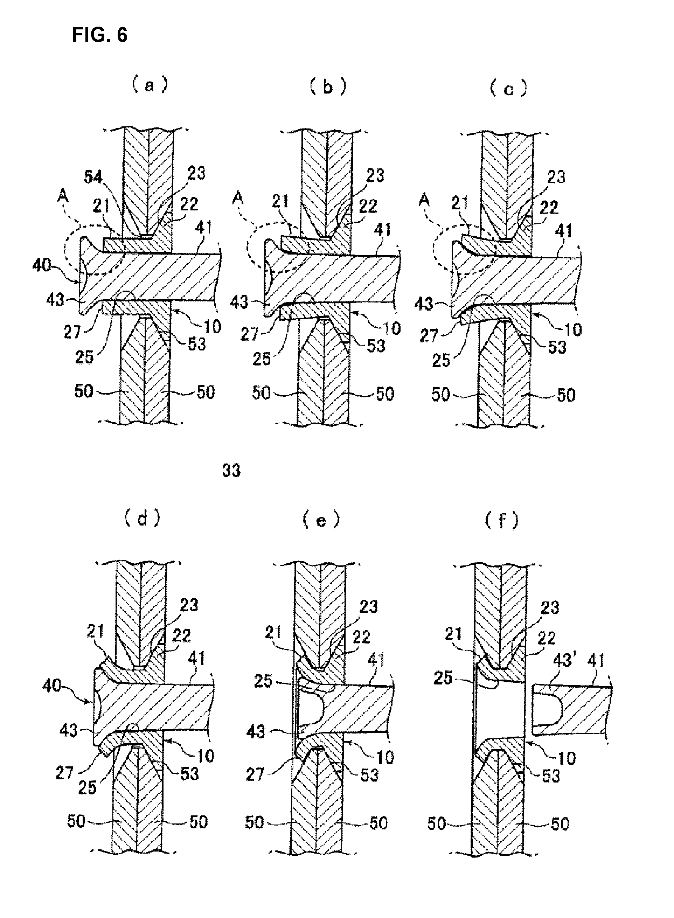

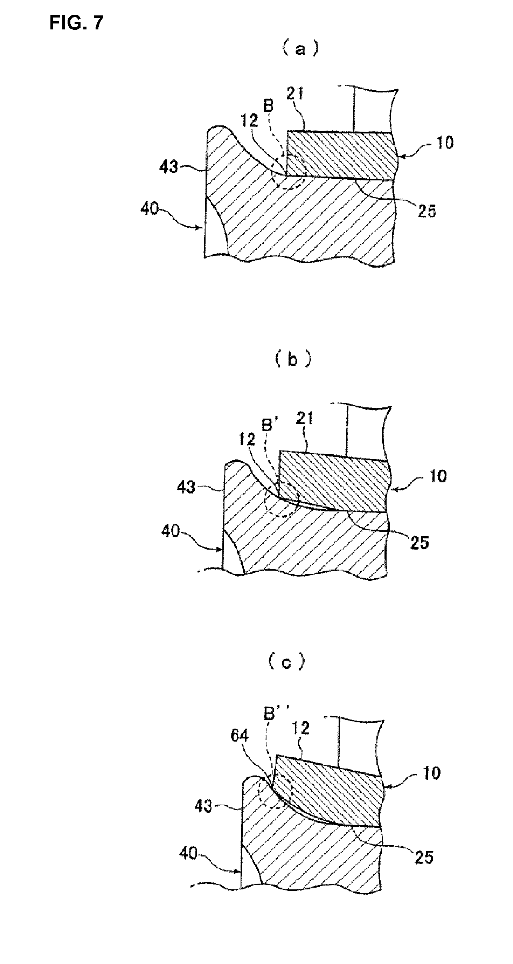

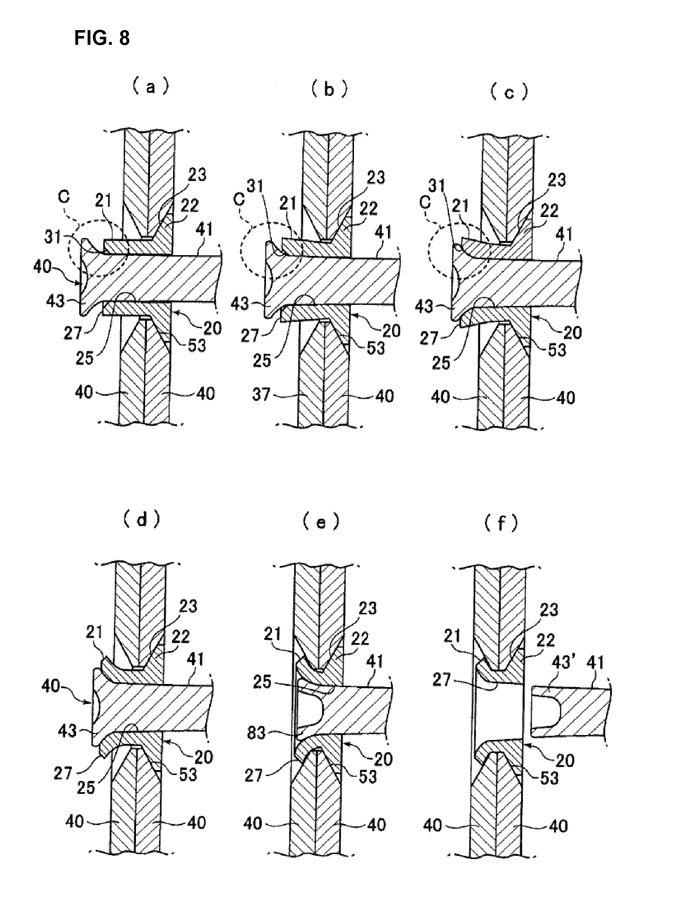

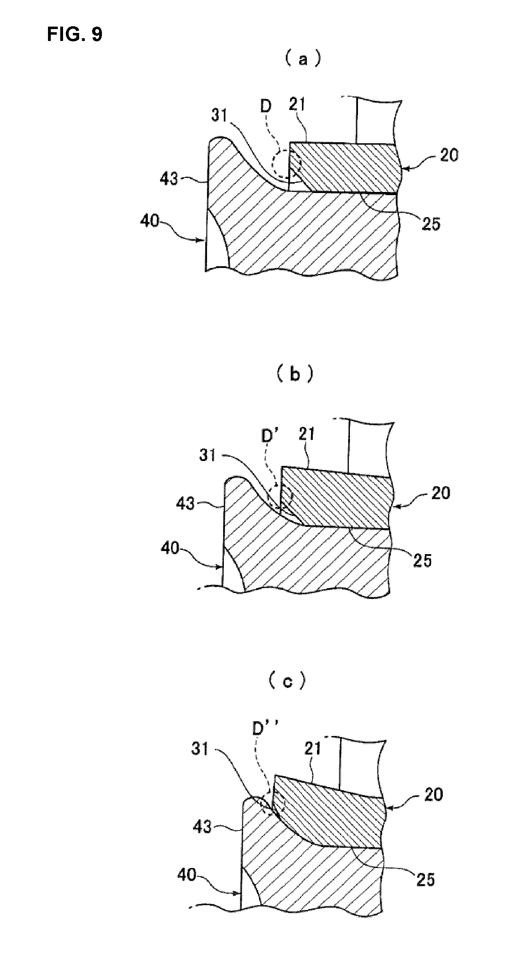

The following is a detailed explanation of the operations of the mandrel 40 and the rivet body 20 when components 50 are fastened using the rivet body 10 in a blind rivet assembly of the prior art and when components 50 are fastened using the rivet body 20 in the blind rivet assembly of first embodiment of the present invention. FIG 6 is a cross-sectional view showing the steps performed when components 50 are fastened using the rivet body 10 in a blind rivet assembly of the prior art. FIGS 7 (a) through (c) are enlarged views inside the circles denoted by A in FIGS 6 (a) through (c). FIG 8 is a cross-sectional view showing the steps performed when components 50 are fastened using the rivet body 20 in the blind rivet assembly in the first embodiment of the present invention. FIGS 9 (a) through (c) are enlarged views inside the circles denoted by C in FIGS 8 (a) through (c). In FIG 6 through FIG 9, the terminal end portion 44 in the head 43 of the mandrel 40 is flat or recessed. A recessed face is preferred because it more easily reduces the outside diameter of the head 43 in the mandrel 40.

In FIG 6 (a), using a rivet body 10 of the prior art, the blind rivet assembly combining a rivet head 10 and a mandrel 40 is passed through the mounting holes 54 in the components 50. The tapered outer surface 23 of the flange 22 in the rivet head 10 makes contact with the countersinks 53 in the components 50. In FIG 7 (a), which is an enlarged view of portion A in FIG 6 (a), the edge 12 of the end portion of the through hole 25 in the rivet head 10 makes contact with the base portion of the head 43 in the mandrel 40. FIG 6 (b) shows a mandrel 40 pulled out slightly using a fastening tool. At this time, the head 43 of the mandrel 40 pushes and slightly expands the blind side end portion 27 of the through hole 25 in the sleeve 21 of the rivet body 10. In FIG 7 (b), which is an enlarged view of portion A in FIG 6 (b), the edge 12 of the through hole 25 in the rivet body 10 makes contact with the base portion of the head 43 in the mandrel 40 and moves in the portion denoted by circuit B'. As a result, plating on the base portion of the head 43 in the mandrel 40 peels off.

FIG 6 (c) shows the mandrel 40 as it continues to be pulled out. The blind side end portion 27 of the through hole 25 in the rivet body 10 is again pushed and widened. In FIG 7 (c), which is an enlarged view of portion A in FIG 6 (c), the edge 12 makes contact with the portion near the tip of the head 43 of the mandrel 40 in the portion denoted by circle B". As a result, the plating near the tip of the head 43 in the mandrel 40 peels off. FIG 6 (d) shows the mandrel 40 pulled further out. The blind side end portion 27 of the through-hole in the rivet head 10 is further pushed and expanded. In the stage shown in FIG 6 (d), the edge 12 no longer makes contact with the mandrel 40, so very little plating is peeled off.

FIG 6 (e) shows the mandrel 40 pulled further out and the components 50 fastened. The blind side end portion 27 of the through hole 25 in the rivet body 10 is further pushed and expanded, the blind side end portion 27 of the sleeve 21 makes contact with a countersink 53 in a component 50, and the mounted components 50 are interposed between the expanded-diameter blind side end portion 27 and the flange 22. The head 43 in the mandrel 40 is pushed from the outside by the sleeve 21, and the diameter is reduced. FIG 6 (f) shows the mandrel 40 completely pulled through the through hole 25 in the rivet body 10, and the components 50 completely fastened. The outside diameter of the head 43 of the mandrel 40 is further reduced but not broken, and the mandrel is pulled out from the through hole 25 in the rivet body 10. The head 43' is thus integrated with the stem 41. When a rivet body 10 of the present invention is used in this way, the edge 12 of the through hole 25 in the rivet body 10 makes contact with the mandrel 40 and moves during the initial fastening stages shown in FIG 6 (a) through FIG 6 (c). This causes plating on the mandrel 40 to peel off.

FIG 8 is a cross-sectional view showing the steps performed when components 50 are fastened using the rivet body 20 of the blind rivet assembly in the first embodiment of the present invention. FIG 9 (a) through FIG 9 (c) are enlarged views inside the circles denoted by C in FIGS 8 (a) through (c). In FIG 8, the terminal end portion 44 of the head 43 in the mandrel 40 has a recessed face.

In FIG 8 (a), a blind rivet assembly combining a rivet head 20 and a mandrel 40 is arranged in the components 50. The tapered outer surface 23 of the flange 22 in the rivet head 20 makes contact with the countersinks 53 in the components 50. In FIG 9 (a), which is an enlarged view of portion C in FIG 8 (a), the beveled face 31 in the through hole 25 of the rivet head 20 makes contact with the base portion of the head 43 in the mandrel 40. FIG 8 (b) shows a mandrel 40 pulled out slightly using a fastening tool. At this time, the head 43 of the mandrel 40 pushes and slightly expands the blind side end portion 27 of the through hole 25 in the sleeve 21 of the rivet body 20. In FIG 9 (b), which is an enlarged view of portion C in FIG 8 (b), a beveled portion 31 is formed in the through hole 25 of the rivet body 20. The beveled portion 31 makes contact with the base portion of the head 43 in the mandrel 40 and moves in the portion denoted by circuit D'. Because the beveled portion 31 makes contact without any sharp angles, the plating on the base portion of the head 43 in the mandrel 40 does not peel off.

FIG 8 (c) shows the mandrel 40 as it continues to be pulled out. The blind side end portion 27 of the through hole 25 in the rivet body 20 is again pushed and widened. In FIG 9 (c), the beveled portion 31 makes contact with the portion near the tip of the head 43 of the mandrel 40 in the portion denoted by circle D". Compared to situations without beveling, the plating near the tip of the head 43 in the mandrel 40 does not peel off. FIG 8 (d) shows the mandrel 40 pulled further out. The blind side end portion 27 of the through-hole in the rivet head 20 is further pushed and expanded. In the stage shown in FIG 8 (d), the beveled portion 31 no longer makes contact with the mandrel 40, so very little plating is peeled off.

FIG 8 (e) shows the mandrel 40 pulled further out and the components 50 fastened. The blind side end portion 27 of the through hole 25 in the rivet body 20 is further pushed and expanded, the blind side end portion 27 of the sleeve 21 makes contact with a countersink 53 in a component 50, and the components 50 are interposed between the expanded-diameter blind side end portion 27 and the flange 22. The head 43 in the mandrel 40 is pushed from the outside by the sleeve 21, and the diameter is reduced. FIG 8 (f) shows the mandrel 40 completely pulled through the through hole 25 in the rivet body 20, and the components 50 completely fastened. The outside diameter of the head 43 in the mandrel 40 is further reduced but not broken, and the mandrel is pulled out from the through hole 25 in the rivet body 20. The head 43' is thus integrated with the stem 41.

In the first embodiment, a beveled portion 31 is formed on the surface of the through hole 25 in the rivet body 20. In the second embodiment, a convex face 32 is formed in the rivet body 20' instead of a beveled portion. The steps performed to fasten together components 50 using the rivet body 20' in the second embodiment are the same as those in the first embodiment explained with reference to FIG 8 and FIG 9. Because a convex or rounded face 32 is formed in the second embodiment, a curved surface makes contact with the mandrel 40, and the plating on the mandrel is even less likely to be peeled off.

When a rivet body 10 of the present invention is used in this way, the edge 12 of the through hole 25 in the rivet body 10 makes contact with the mandrel 40 and moves during the initial fastening stages shown in FIG 6 (a) through FIG 6 (c). This causes plating on the mandrel 40 to peel off. In the first and second embodiments of the present invention, a beveled face 31 or convex face 32 is disposed in the through hole 25 in the rivet body 20. When the fastening operation is performed with this rivet head 20, the beveled face 31 or convex face 32 makes contact with the mandrel 40 instead of an edge during the initial fastening stages shown in FIG 8 (a) through FIG 8 (c). As a result, the plating on the mandrel 40 does not peel off.

## Claims

1. A blind rivet assembly for fastening a plurality of components (50) having mounting holes (54), the blind rivet assembly comprising
a rivet body (20) having a hollow sleeve (21) comprising a through hole (25) having an inner diameter, a blind end portion (27), and a flange (22) formed at a tool side end of the sleeve (21), and
a mandrel (40) having an elongated stem (41) and a head (43), the stem (41) extending through the sleeve (21) prior to setting and having a diameter that is smaller than the inner diameter of the sleeve (21) and a length that is greater than the length of the sleeve (21), and the head (43) having a diameter that is greater than the inner diameter of the sleeve (21), wherein when the stem (41) of the mandrel (40) is pulled to fasten the mounted components (50) using the rivet body (20), the blind end portion (27) of the sleeve is pushed by the head (43) to outwardly expand its diameter, the head (43) is pulled through the through hole (25) in the rivet body (20) without breaking off the stem (41) of the mandrel (40), and the components (50) are fastened between the flange (22) of the rivet body (20) and the expanded-diameter blind end portion (27) of the sleeve (21), **characterized in that** a beveled face (31) or a convex face (32) is formed in the blind end portion (27) of the through hole (25) in the sleeve (21) of the rivet body (20).

2. The blind rivet assembly of claim 1, wherein the head (43) of the mandrel (40) has a tapered face (45) on the side facing the blind end portion (37) of the sleeve (21), and wherein the diameter of the blind end portion (27) of the sleeve (21) is expanded by the tapered face (45) of the head (43).

3. The blind rivet assembly of anyone of claims 1 and 2, wherein a countersink (53) is formed in the each one of the components (50), wherein the flange (22) of the rivet body (20) has a tapered outside face (23) on the opposite side of the tool side end, and wherein the tapered outside face (23) of the flange (22) contacts the countersink (53) in one of the components (50), the expanded-diameter blind end portion (27) of the sleeve (20) contacts the countersink (53) in another component (50) , when the plurality of components (50)are fastened by the rivet body (20).

4. The blind rivet assembly of claim 3, wherein after the components (50) have been fastened, the expanded-diameter blind end portion (27) of the rivet body (20) is substantially flush or below flush an adjacent outside surface (52) of the components (50).

5. A method for fastening a plurality of components (50) using a rivet body (20) of a blind rivet assembly, wherein the rivet body (20) is prepared having a hollow sleeve (21) comprising a through hole (25) having an inner diameter, a blind end portion (27), and a flange (22) formed on a tool side end of the sleeve (21), a beveled face (31) or a convex face (32) being formed in the blind end portion (27) of the through hole (25) in the sleeve of the rivet body, a mandrel (40) is prepared having an elongated stem (41) and a head (43), the stem (41) extending through the sleeve (21) prior to setting and having a diameter that is smaller than the inner diameter of the sleeve (21) and a length that is greater than the length of the sleeve (21), and the head (43)having a diameter that is greater than the inner diameter of the sleeve (21), and the rivet body (20) and the mandrel (40) are combined to obtain a blind rivet assembly, and wherein the blind rivet assembly is inserted into through holes (54) of the components (50), the stem (41) of the mandrel (40) is pulled out of the sleeve (21)while supporting the tool side sleeve end, the head (43) expands the diameter of the blind end portion (27) of the sleeve (21), the head (43) is pulled through the through hole (25) in the rivet body (20) without breaking off the stem (41) of the mandrel (40), and the components (50) are fastened between the flange (22) of the rivet body (20) and the expanded-diameter blind end portion (27) of the sleeve (21).
